# EUROPEAN PATENT APPLICATION

(11) **EP 3 744 704 A1**
(43) Date of publication of application: **02.12.2020**
(21) Application number: 19177178.1
(22) Date of filing: 29.05.2019
(51) Int. Cl.: C04B 28/24, C04B 24/26, C04B 41/50, C04B 111/72

(54) **NON-INVASIVE REPAIR AND RETROFITTING OF HARDENED CEMENTITIOUS MATERIALS**

(71) Applicant: SIKA TECHNOLOGY AG, 6340 Baar (CH)
(72) Inventor: Valverde, Cristina, 28108 Alcobendas (ES); Garcia, Ramiro, 28108 Alcobendas (ES); Granizo, Luz, 28043 Madrid (ES)
(74) Representative: Sika Patent Attorneys

(57) **Abstract**

The invention relates to an aqueous composition for repairing and/or sealing of hardened cementitious materials, especially of concrete structures, the aqueous composition comprising colloidal silica and a polycarboxylic acid. An aqueous composition of the present invention shows a very high penetration depth as well as sealing capacity of cracked cementitious materials.

## Description

### Technical field

The invention is directed to an aqueous composition for repairing and/or sealing of hardened cementitious materials, especially concrete structures, a method for repairing and/or sealing of hardened cementitious materials using the aqueous composition and the corresponding use of the aqueous composition.

### Background of the invention

Modern concrete is a very durable construction material and, if properly proportioned and placed, will give very long service life under normal conditions. In any case, hardened cementitious materials, especially concrete structures, are subject to damages which may be a result of e.g. inappropriate manufacture or deterioration from weathering or other harsh conditions by mechanical, physical or chemical attack. Therefore, repair and/or sealing of hardened cementitious materials can be necessary to improve durability of the structures. Need for repair and healing of cementitious materials, especially concrete structures is becoming more important and in the future will be an important market, as long life cycles in construction have an increasing potential.

Apart from concrete repair materials based on mineral binder suitable for repair or restoration of damaged structures, there exists a range of other materials that are used for repairing and/or sealing of hardened cementitious materials.

For instance, pure colloidal silica can be used for repairing and sealing of hardened reinforced concrete structures. Effectiveness is, however, low. EP3053901 (Sika AG) teaches an aqueous composition for repairing and/or sealing of hardened concrete structures comprising colloidal silica and polycarboxylate ether. However, the penetration depth of such compositions can be limited.

US 2013/281577 (W.R. Grace & Co) describes aqueous additive compositions for modifying cementitious compositions comprising colloidal nano-particles consisting of silica and polycarboxylate ether. However, the use for repair of hardened cementitious materials is not disclosed and subsequently the penetration depth of such compositions is not optimized.

EP 2251376 (Sika AG) teaches aqueous polymer dispersions comprising, in a preferred embodiment, inter alia 5-15 % by weight of a comb polymer, 10-30 % by weight of fumed or colloidal silica, and 30-70 % by weight of water. However, the use for repair of hardened cementitious materials is not disclosed and subsequently the penetration depth of such compositions is not optimized.

JP 2014-177394 describes a repair method for concrete structures wherein a restoring material is applied to a place where a portion of the concrete structure is removed, wherein the restoring material is a mortar compositions comprising inter alia cement, fluidizing agent comprising polycarboxylic acid based copolymer, and amorphous silica fine powder. However, the solution provided is a mortar which is not capable of penetrating into deep cracks.

US 2004/0077768 (Akzo Nobel) discloses co-dispersions of colloidal silica and organic binder, for example poly(acrylic acid). However, these systems are used as coating materials and not for repair of hardened cementitious materials.

Commercial examples for water resisting and crystalline waterproofing concrete admixtures are Sika WT-200® series, Sika Schweiz AG, which are crystalline admixtures for self-healing concrete resulting in crystalline-based self-healing, which react with portlandite (calcium hydroxide) to create water-insoluble crystals. Crystalline admixtures for waterproofing are also sold by Xypex Chemical Corp.

Other examples of agents which are used for repairing and/or sealing of concrete structures are bacillus sphaericus, zinc sulfate, alumina-coated silica nanoparticles, blast furnace slag or fly ashes.

The materials used for repair and/or sealing are often rather expensive or exhibit low performance, especially low penetration depth. Many approaches do not support self-healing processes. The application to the cementitious material can be complicated and time consuming.

### Summary of the invention

The object of the invention therefore is to provide a composition for repairing and/or sealing of hardened cementitious materials, in particular concrete structures and reinforced concrete structures, which overcomes the disadvantages of the prior art approaches discussed above. In particular, the composition should be relatively inexpensive, enable simple and/or quick application to the hardened cementitious materials, and show high penetration depth. Moreover, the composition should exhibit good performance by initiating healing processes of the cement.

Surprisingly, this object could be achieved by an aqueous composition including a combination of colloidal silica and a polycarboxylic acid.

Accordingly, the present invention is related to an aqueous composition for repairing and/or sealing of hardened cementitious materials, especially concrete structures, the aqueous composition comprising colloidal silica and a polycarboxylic acid, wherein the polycarboxylic acid according to claim 1 is not a comb polymer.

Major advantages of the composition are the low cost compared to other approaches, and the simplicity and/or rapidity of application. Surprisingly, an improved performance is also achieved as the penetration depth of the composition is very high, preferably at least 10 mm, in particular at least 20 mm or higher, and the growth of new hydrated cement products occurs, in particular along the sides of crack, contributing to the crack "healing" process.

The aqueous composition enables a non-invasive treatment for hardened cementitious materials, especially concrete structures, that effectively interacts with existing concrete matrix forming new hydrated products in a secondary hydration process of cement and/or SCM. SCM is a common abbreviation for supplementary cementitious materials such as fly ash or slag, e.g. blast-furnace slag.

The invention is also related to a method for repairing and/or sealing of a hardened cementitious material, especially a concrete structure, comprising the step of applying the aqueous composition according to the invention to the hardened cementitious material or a part thereof, and the use of the aqueous composition for repairing and/or sealing a hardened cementitious material. Preferred embodiments of the invention are recited in the dependent claims.

Details given in the following equally apply to the aqueous composition, the method and the use, where applicable.

### Brief description of the figures

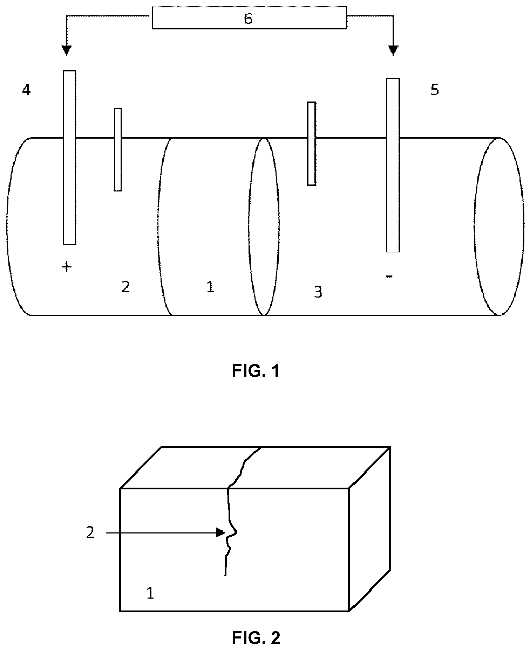

Fig. 1 is a schematic view of a method where the aqueous composition according to the invention is applied by migration. In Fig. 1 the aqueous composition of the invention is positioned as the catholyte 3 on one side of the hardened concrete structure 1 to be repaired or sealed. Water, in particular distilled water, is positioned on the other side as the anolyte 2. Electrodes 4, 5 are immersed in the anolyte and catholyte, repectively, which are connected to a voltage source 6 (e.g. 12 V). The electrical potential can be applied e.g. in 3 cycles, namely 2 days connected and 1 day disconnected.
Fig. 2 is a schematic view of the cracked test specimen used for examples. In Fig. 2 the mortar prism 1 has a crack 2 which extend to a certain depth which is lower than the diameter of the prism.

### Detailed description of the invention

The aqueous composition comprises colloidal silica. Colloidal silica refers to silica particles dispersed in a colloidal state in a liquid phase, typically water. A colloid is a stable dispersion of particles. The stable dispersion or colloid of silica particles is also called silica sol. Colloidal silica is generally amorphous silica. Colloidal silica is commercially available from a number of companies, for example under the brand name Levasil from Nouryon. The commercial products of colloidal silica can vary e.g. with respect to the pH value, the particles size or the concentration. It is possible to use one type of colloidal silica or a mixture of two or more types of colloidal silica, differing e.g. in particle size.

The colloidal silica may be anionic colloidal silica or cationic colloidal silica. As is known by the skilled person, the dispersions of colloidal silica usually include cations or anions for stabilization. In the case of cationic colloidal silica the silica particles are usually coated with alumina. The colloidal silica may be non-surface modified silica or surface modified silica, for instance surface modified with silanes or siloxanes.

The weight average particle size of colloidal silica is usually in the range of 1 to 150 nm, preferably in the range of 2 nm to 35 nm, more preferably 5 nm to 10 nm. Particularly preferred is a small dispersion of particle size, e.g. a weight average particle size around 5 nm. The weight average particle size as used herein can be determined by dynamic light scattering method as described in ISO 22412:2017.

The aqueous composition further comprises at least one polycarboxylic acid. The aqueous composition may comprise one or more polycarboxylic acids. Polycarboxylic acids within the context of the present invention are homo- or copolymers of at least one ethylenically unsaturated carboxylic acid or dicarboxylic acid. Suitable ethylenically unsaturated carboxylic or dicarboxylic acids are selected from the group consisting of acrylic acid, methacrylic acid, 3,3-dimethylacrylic acid, crotonic acid, isocrotonic acid, angelic acid, tiglinic acid, maleic acid, fumaric acid, itaconic acid, and sorbic acid, preferably from acrylic acid and/or methacrylic acid.

The homo- or copolymers of said ethylenically unsaturated carboxylic or dicarboxylic acids may contain small amounts of further comonomers such as ethylene, propylene, butadiene, isoprene, styrene, alkylesters of acrylic and methacrylic acids, acrylonitrile, acrylamide, vinylesters, preferably vinylacetate, vinylchloride, and vinylpyrrolidone. It is however preferred that a polycarboxylic acid of the present invention consist to at least 85 mol-%, preferably at least 90 mol-%, more preferably at lest 95 mol-%, especially at least 99 mol-%, each based on the total composition of the polycarboxylic acid, of monomers selected from the above list of ethylenically unsatuated carboxylic or dicarboxylic acids.

The above homo- and copolymers can be linear or branched and they may be additionally crosslinked. Copolymers may be random, a block copolymer or have a gradient.

According to embodiments, the polycarboxylic acid is a homopolymer, preferably a homopolymer of acrylic acid or methacrylic acid.

The polycarboxylic acids of the present invention may be used in their protonated from or in their partially or fully neutralized form.

According to a preferred embodiment, at least part of the carboxylic groups of a polycarboxylic acid of the present invention are neutralized with an oxide or hydroxide of an alkali or alkaline earth metal or with ammonia.

According to a particularly preferred embodiment, the polycarboxylic acid is a polyacrylate or a polymethacrylate, especially in form of their sodium salts.

The weight average molecular weight (M_{w}) of the polycarboxylic acid is preferably 1'000 - 150'000 g/mol, more preferably 5'000 - 100'000 g/mol. The weight average molecular weight can be determined by gel permeation chromatography (GPC).

According to embodiments, the polycarboxylic acid can be in form of a solid, preferably a fine powder with particle sizes of between 20 - 3000 µm, preferably between 50 - 1000 µm, more preferably between 90 - 850 µm. The particle size distribution can be determined by a method as described in ASTM C136 and ASTM C117.

According to further embodiments, the polycarboxylic acid can be in form of an aqueous preparation, especially a solution or a dispersion. The aqueous preparation has a solid content of at least 25 wt.-%, preferably at least 30 wt.-%, especially at least 40 wt.-%, each based on the total weight of the aqueous preparation.

A polycarboxylic acid of the present invention does not contain any polyalkyleneoxide groups bonded to the polycarboxylic acid backbone. A polycarboxylic acid of the present invention thus is not a comb polymer also known as PCE superplasticizer.

The aqueous composition of the present invention contains water. As mentioned above a plurality of aqueous dispersions of colloidal silica or silica sol, respectively, as well as polycarboxylic acids are commercially available. Also the polycarboxylic acid products commercially available can be mixtures with water. The aqueous composition can be easily produced by mixing an aqueous dispersion of colloidal silica or silica sol, respectively, and polycarboxylic acid, e.g. as an aqueous solution or dispersion. If necessary, the water content may be adjusted by addition of further water. If necessary, the pH value may be adjusted by addition of an acid or a base.

The aqueous composition is a liquid. The aqueous composition is preferably an aqueous dispersion or sol. The pH value of the aqueous composition may vary in broad ranges depending on the type of components used and the desired application. According to embodiments, the pH value of the aqueous composition may vary between 1 and 13, preferably between 6 and 12, especially between 7.5 and 11.

The content of colloidal silica in the aqueous composition, based on the total weight of the aqueous composition, is preferably 1 to 50 wt.-%, more preferably 5 to 50 wt.-% or 10 to 50 wt.-% and still more preferably 5 to 45 t.-% or 10 to 45 wt.-%. As usual, the weight of colloidal silica here refers to the solid content of SiO₂, i.e. without water.

The content of polycarboxylic acid in the aqueous composition, based on the total weight of the aqueous composition, is preferably 1 to 50 wt.-%, more preferably 2 to 50 wt.-% or 4 to 50 wt.-% and still more preferably 2 to 25 wt.-% or 4 to 25 wt.-%.

In a preferred embodiment the content of colloidal silica in the aqueous composition, based on the total weight of the aqueous composition, is 10 to 20 wt.-%, and/or content of polycarboxylic acid in the aqueous composition, based on the total weight of the aqueous composition, is 2 to 10 wt.-%, in particular 2 to 5 wt.-%.

According to particularly preferred embodiments, the weight ratio of colloidal silica to polycarboxylic acid on a dry base is at least 4, preferably at least 4.5.

The content of water in the aqueous composition, based on the total weight of the aqueous composition, is e.g. at least 15 wt.-%, preferably at least 25 wt.-%, more preferably at least 40 wt.-% or at least 60 wt.-%.

The aqueous composition may optionally further comprise one or more additives. The additives may be those which are commonly used in this technical field.

In particular, it is generally appropriate that the aqueous composition does not contain a hydraulic mineral binder such as e.g. cement, because a mineral binder is reactive with water. According to especially preferred embodiments, the composition of the present invention is free of hydraulic mineral binders, especially cement.

The total amount of colloidal silica, polycarboxylic acid and water, based on the total weight of the aqueous composition, may vary depending on the requirements, e.g. at least 80 wt.-%, preferably at least 90 wt.-%, more preferably at least 95 wt.-%.

The aqueous composition according to the invention is suitable for a method for repairing and/or sealing a hardened cementitious material, especially a hardened concrete structure. The concrete structure is preferably a hardened reinforced concrete structure.

The hardened concrete structure or hardened reinforced concrete structure may be e.g. any civil structure or a part thereof. Examples of civil structures are buildings, bridges, pipelines, dams, reservoirs, underground structures such as tunnels, stock underpasses and monuments. The hardened concrete structure or hardened reinforced concrete structure may be e.g. a wall, slab, beam, column, pier, post, handrail, parapet, foundation, flooring, frame, curb, sill, ledge, coping, cornice, or corner.

The degree of impermeability of concrete against water is determined by impermeability of the binder matrix. Hardened concrete is a porous material that allows the passage of water or other media through a structure of capillary pores. These capillaries are the voids created by the excess water in the concrete that is not necessary for the chemical reaction for hardening known as hydration.

In addition, the hardened cementitious material, especially the concrete structure, may have damages or defects e.g. caused by thermal, mechanical, chemical and/or physical attack. Common damages or defects in the cementitious materials are e.g. cracks, voids or interstices. Of course, impermeability is further reduced by such damages or defects.

Cracks with a width of up to several millimeters, for example cracks with a width of up to 2 mm, 5 mm or 10 mm, can be repaired or sealed by an aqueous composition of the present invention. Although cracks with a width below 0.4 mm or 0.2 mm are usually regarded as being not problematic for the structural integrity of cementitious materials, especially hardened concrete, such cracks may also be repaired or sealed with an aqueous composition of the present invention, for example to improve or restore the aesthetic impression of a concrete surface.

The method for repairing and/or sealing a hardened cementitious material, especially a hardened concrete structure, comprises the step of applying the aqueous composition of the invention to the hardened cementitious material, especially to the concrete structure or a part thereof. Depending on the purpose, the aqueous composition may be applied to the entire hardened cementitious material or only to a part thereof. For instance, the treatment may be effected only on parts of a hardened concrete structure, which include damages or defects or which may be exposed to harsher conditions, e.g. contact with water, than other parts.

The application of the aqueous composition to the hardened cementitious material, especially a concrete structure, or a part thereof may be carried out by conventional means. The aqueous composition may applied onto the surface of the cementitious material or a part thereof for example by roller, brush, trowel or by spray, e.g. by air gun spray or airless spray, so that the material can infiltrate into the surface. Transportation is mainly by capillary suction. This can be also considered as infiltration or impregnation.

Alternatively, the aqueous composition may be applied to the hardened cementitious material, especially a concrete structure, or a part thereof by injection. Common injection devices such as manual injection devices or injection pumps may be used. Injection is particularly suitable for filling of cracks but this can also be achieved by the other methods mentioned.

Alternatively, the aqueous composition may be applied to the hardened cementitious material, especially the concrete structure, or a part thereof by migration (cf figure 1). The migrating method is a method known by the skilled person wherein an anolyte is positioned on one side of the hardened concrete structure to be repaired or sealed and a catholyte is positioned on the other side. An external electrical potential is then applied across the hardened cementitious material so that ions can migrate into the structure. In the migrating method according to the invention the aqueous composition of the invention is used as one electrolyte, preferably as the catholyte. The other electrolyte, preferably the anolyte, is e.g. water, in particular distilled water. The migration can be effected in one or more cycles of application of the external electrical potential.

Accordingly, the aqueous composition is preferably applied to the hardened cementitious material, especially the concrete structure, or a part thereof by injecting, migrating or capillary suction. Injecting and capillary suction are very simple application methods. The migrating method is rapid and time saving.

The method of the invention is a non-invasive method. Non-invasive means a non-destructive method, i.e. the cementitious material, especially the concrete, to be repaired and/or sealed, such as fissured concrete, is not removed.

The method of the invention is particularly suitable for hardened concrete structure or hardened reinforced concrete structure which includes cracks. Sealing of the cementitious material refers to protection against ingress, i.e. reducing or preventing the ingress of adverse agents, e.g. water, other liquids, vapour, gas, chemicals and biological agents. Sealing is a measure to improve impermeability of the concrete.

The amount of an aqueous composition of the present invention to be applied to a hardened cementitious material, especially a concrete structure or a part thereof, is not particularly limited.

The aqueous composition of the present invention is typically applied in one coat, layer or step. It is, however, also possible, and in certain cases also preferred, to apply the aqueous composition of the present invention in multiple coats, layers or steps, for example in two or three coats, layers or steps, each being subsequently applied with a waiting period in between. An application in multiple coats, layers or steps may further increase the penetration depth of an aqueous composition of the present invention.

The components of the aqueous composition according to the invention can form non-soluble materials throughout the pore and capillary structure of the concrete and seal the concrete. Thus, the protection against penetration of water and other liquids can be improved so that impermeability is enhanced.

In addition, the aqueous composition can also repair damages or defects of the hardened cementitious material, especially the concrete structure, by enhancing the self-healing properties of cementitious material and improving the ability to heal damages or defects such as cracks.

The components of the aqueous composition, in particular colloidal silica, effectively interacts with the existing cementitious matrix of the cementitious material, especially the concrete, forming new hydrated cement products in a secondary hydration process of cement and/or SCM. The growth of new hydrated cement products occurs in particular at crack sides also involved in the crack healing process. Thus, a restoration of cementitious materials can take place.

The aqueous composition of the invention comprising colloidal silica and polycarboxylic acid has significantly improved performance, especially improved penetration depth, compared to the use of colloidal silica by itself or the combined use of colloidal silica and a PCE. Thus, by the method of the invention the aqueous composition applied enables formation of new hydrated products at the sides of crack with Ca/Si ratio below 1.0 in some cases, demonstrating the effectiveness of the method. While ordinary values for Portland CSH phase are Ca/Si =1.4 - 2.0 in a SEM characterization, the new chemical and physical healing is based on a different phase (which is not Portlandite) with a Ca/Si ratio of 0.5 - 1.

The method of the invention is suitable for sealing of hardened cementitious materials, especially of concrete structures. The impermeability of the cementitious materials can be improved by this treatment. Thus, the method of the invention is suitable for retrofitting the cementitious materials, especially the concrete structure. The method of the invention is also suitable for repairing of hardened cementitious materials, especially concrete structures, since it induces growth of new hydrated cement product, in particular at crack sides, so that a healing or restoration can be achieved. Of course, the method is also suitable for repairing and sealing of hardened cementitious materials, especially of concrete structures, simultaneously.

The method of the invention may optionally comprise further steps. Such further steps especially are the preparation of the surface to be treated, for example cleaning, de-dusting, drying, wetting and/or applying a primer.

The method of the invention may optionally be combined with at least one additional treatment of the cementitious materials. The additional treatment may be selected from at least one of the conventional treatments of hardened cementitious materials, especially concrete structures, e.g. protecting the reinforcement of reinforced concrete by application of a corrosion inhibiting agent, crack sealing with a reactive agent, e.g. epoxy resin or polyurethane resin, or waterproofing of the surface of the concrete structure with a hydrophobic material (hydrophobic impregnation).

Accordingly, the aqueous composition of the invention is suitable for repairing and/or sealing a hardened cementitious material, especially a concrete structure, preferably a hardened reinforced concrete structure.

### Examples

### Test of penetration depth and crack filling capacity

**Table 1: materials used**

| | |
|---|---|
| Ref. 1 | Aqueous solution of colloidal silica, surface treated with epoxysilane, SiO₂ content: 37% by weight, average particle size 12 nm |
| Ref. 2 | Aqueous composition containing 60 parts colloidal silica (SiO₂ content: 37% by weight, average particle size silica: 12 nm), 10 parts polycarboxylate ether¹, and 30 parts of water |
| Ex. 1 | Aqueous composition containing 60 parts colloidal silica (SiO₂ content: 37% by weight, average particle size silica: 12 nm), 10 parts polyacrylate², and 30 parts of water |

| | |
|---|---|
| ¹ 40 wt.-% aqueous solution of comb polymer (Mw appr. 45'000 g/mol, polyacrylate backbone with polyethylene glycol side chains, molar ratio of side chains to acrylate: 1.86) ² 50 wt.-% aqueous solution of polyacrylate (Mn: 5'000 g/mol) | |

Ex. 1 is the inventive aqueous composition. Ref. 1 and Ref. 2 are reference examples.

Compositions Ref. 1, Ref. 2, and Ex. 1 were applied on mortar prisms of 4 x 4 x 16 cm, made from a mortar based on Ordinary Portland cement (CEM I R/SR) and quartz sand with a cement/sand ratio of 0.33 and a water/cement ratio of 0.5. 600 g/m³ of monofilament polypropylene fibres with 12 mm length were added. The addition of fibres was necessary to prevent complete fracture of the test specimens upon introduction of cracks. The mortar prisms were fully cured at 21°C / 95% r.h. One crack per mortar prism with a width of between 229 and 326 µm was then introduced by three-point bending.

Application of compositions Ref. 1, Ref. 2, and Ex. 1 was done at 21°C / 60% r.h. by a two-step procedure. In the first step the respective composition was allowed to freely penetrate the whole area of the crack for 24h, then the surface was allowed to dry for 2 days and then the free penetration was repeated for another 24h. In the second step, an electric field (12 V) was applied across the test specimen for 24h.

The penetration depth was measured along the crack sides by analysis of the material composition inside the crack by energy-dispersive X-ray spectroscopy (EDX) with a scanning electron microscope (SEM) in back-scattering mode. The relative abundance of SiO₂, CaO, Al₂O₃, K₂O, and SO₃ were determined in various depth along the crack on cross-sections of treated test specimens after 28d of curing at 23°C/ 50% r.h. As the compositions applied form gels of calcium silicate hydrate (CSH-gels), the CaO/ SiO₂ ratio of these gels was subsequently calculated to judge the penetration depth. CSH-phases with a CaO/ SiO₂ ratio <1 are CSH-gels derived from one of the compositions Ref. 1, Ref. 2, Ex. 1 while CSH-phases with a CaO/ SiO₂ ratio >1 are phases of the surrounding mortar.

The following table 2 shows the respective CaO/SiO₂ ratios and thus the relevant penetration depth. As can be seen, the penetration of the inventive sample Ex. 1 is significantly higher than any of the references.

The degree of crack filling was determined visually by means of stereoscopic magnifying glass. This relies on the growth of new hydrated cement phases. The following table 2 shows the degree of crack filling. It can be seen that the inventive example Ex. 1 has a higher degree of crack filling close to the surface and up to 1 mm depth.

**Table 2**

| | | | | | | |
|---|---|---|---|---|---|---|
| **Depth [mm]** | 0.5 | 1 | 3 | 10 | 20 | 30 |
| **CaO/SiO₂ ratio Ref. 1** | n.m. | 0.87 | 1.05 | n.m. | n.m. | n.m. |
| **CaO/SiO₂ ratio Ref. 2** | 0.09 | 0.26 | 0.60 | 1.01 | 1.47 | n.m. |
| **Degree of crack filling Ref. 2** | partial | partial | partial | partial | partial | n.m. |
| **CaO/SiO₂ ratio Ex. 1** | 0.84 | 0.95 | 0.95 | 0.56 | 0.64 | 0.64 |
| **Degree of crack filling Ex. 1** | complete | complete | partial | partial | partial | partial |

| | | | | | | |
|---|---|---|---|---|---|---|
| n.m.: not measurable | | | | | | |

A further test was carried out to show the effective filling or healing of the crack. This test is based on a resistivity measurement across the filled crack, which means resistivity across the repaired mortar. A lower resistivity is an indication for a more efficient treatment as cracks are filled with conductive material.

As can be seen from the following table 3, this resistivity is lower for inventive example Ex. 1 as compared to Ref. 2 which means that repair has been more effective with Ex. 1.

**Table 3**

| **time after treatment [d]** | 1 | 3 | 4 | 7 |
|---|---|---|---|---|
| **Resistivity [KΩ x cm] Ref. 2** | 41.2 | 42.5 | 43 | 40.5 |
| **Resistivity [KΩ x cm] Ex. 1** | 39.5 | 39 | 41 | 39.5 |

## Claims

1. An aqueous composition for repairing and/or sealing of hardened cementitious materials, especially hardened concrete structures, the aqueous composition comprising colloidal silica and at least one polycarboxylic acid, wherein the at least one polycarboxylic acid is not a comb polymer.

2. The aqueous composition according to claim 1, wherein the weight average particle size of the colloidal silica is in the range of 1 nm to 150 nm, preferably 2 nm to 35 nm, more preferably 5 nm to 10 nm.

3. The aqueous composition according to any one of claims 1 to 2, wherein, based on the total weight of the aqueous composition, the content of colloidal silica is in the range of 1 to 50 wt.-%, preferably of 5 to 50 wt.-% and the content of polycarboxylic acid is in the range of 1 to 50 wt.-%, preferably 2 to 50 wt.-%, especially 2 to 25 wt.-%.

4. The aqueous composition according to any one of claims 1 to 3, wherein the weight ratio of colloidal silica to polycarboxylic acid on a dry base is at least 4, preferably at least 4.5.

5. The aqueous composition according to any one of the preceding claims, wherein the at least one polycarboxylic acid consists to at least 85 mol-%, preferably at least 90 mol-%, more preferably at least 95 mol-%, especially at least 99 mol-%, each based on the total composition of the polycarboxylic acid, of monomers selected from acrylic acid, methacrylic acid, 3,3-dimethylacrylic acid, crotonic acid, isocrotonic acid, angelic acid, tiglinic acid, maleic acid, fumaric acid, itaconic acid, and sorbic acid, preferably acrylic acid and/or methacrylic acid.

6. The aqueous composition according to claim 5, wherein the at least one polycarboxylic acid is a homopolymer, preferably a homopolymer of acrylic acid or methacrylic acid.

7. The aqueous composition according to any of the preceding claims, wherein the total amount of colloidal silica, polycarboxylic acid and water, based on the total weight of the aqueous composition, is at least 80 % by weight, preferably at least 90 % by weight.

8. The aqueous composition according to any of the preceding claims, wherein, based on the total weight of the aqueous composition, the content of water is at least 15 % by weight, preferably at least 25 % by weight, more preferably at least 40 % by weight.

9. A method for repairing and/or sealing a hardened cementitious material, comprising the step of applying an aqueous composition according to any one of claims 1 to 8 to the hardened cementitious material or a part thereof.

10. The method according to claim 9, wherein the hardened cementitious material is a hardened concrete structure, especially a hardened reinforced concrete structure.

11. The method according to any of claims 9 to 10, wherein the aqueous composition is applied by injecting, migrating, infiltration or application onto the surface of the structure, e.g. by brush, spray or roller.

12. The method according to any one of claims 9 to 11, wherein the hardened cementitious material includes cracks.

13. The method according to any one claims 9 to 12, wherein application of the aqueous composition to the hardened cementitious material is non-invasive.

14. The method according to any one claims 9 to 13, wherein the method comprises at least one additional treatment of the hardened cementitious material selected from protecting a reinforcement by application of a corrosion inhibiting agent, crack sealing with a reactive agent or waterproofing of the surface of the hardened cementitious material with a hydrophobic material.

15. Use of an aqueous composition according to any one of claims 1 to 7 for repairing and/or sealing a hardened cementitious material, preferably a hardened concrete structure, especially a hardened reinforced concrete structure.
